# EUROPEAN PATENT SPECIFICATION

(11) **EP 0 583 844 B1**
(45) Date of publication and mention of the grant of the patent: **28.07.1999**
(21) Application number: 93202418.5
(22) Date of filing: 17.08.1993
(51) Int. Cl.: H04N 5/32, H05G 1/64, G21K 4/00

(54) **X-ray examination apparatus with light concentration means and plural image sensors**
Röntgenuntersuchungsvorrichtung mit Mitteln zur Konzentration des Lichts und mehreren Bildaufnahmesensoren
Appareil pour l'examen radiographique avec moyens de concentration de la lumière et plusieurs capteurs d'image

(30) Priority: 18.08.1992 EP 92202521; 29.12.1992 EP 92204101
(43) Date of publication of application: 23.02.1994
(73) Proprietor: Koninklijke Philips Electronics N.V., 5621 BA Eindhoven (NL)
(72) Inventor: Snoeren, Rudolph Maria, NL-5656 AA Eindhoven (NL); Slotboom, Jan Willem, NL-5656 AA Eindhoven (NL)
(74) Representative: Schouten, Marcus Maria

(56) References cited:
- EP-A- 0 209 186
- EP-A- 0 221 503
- EP-A- 0 233 497
- EP-A- 0 377 078
- EP-A- 0 423 030
- EP-A- 0 498 662
- DE-A- 3 207 085
- US-A- 4 479 061
- PATENT ABSTRACTS OF JAPAN vol. 16, no. 364 (E-1244)6 August 1992 & JP-A-4 115 575 ( MITSUBISHI ELECTRIC CORP. ) 16 April 1992

## Description

The invention pertains to an x-ray examination apparatus comprising an x-ray source, an imaging arrangement including a radiation conversion screen facing the x-ray source, for converting image carrying x-radiation into image carrying visible radiation, image conversion means having a plurality of image sensors for converting the image carrying visible radiation formed by said radiation conversion screen into an electronical signal,a plurality of lenses aligned with the radiation conversion means, so that respective regions of the radiation conversion screen are imaged on respective image sensors.

An x-ray examination apparatus of said kind is known from the US patent **US 4 503 460**.

The known x-ray examination apparatus comprises multiple image conversion means in that a plurality of semiconductor image sensors and optical coupling means having a plurality of lenses are provided for imaging respective regions of an output screen of an x-ray image intensifier onto respective semiconductor image sensors.

Various radiological examination procedures require that low doses of radiation are administered to an object. In particular, this is the case when a medical examination procedure is performed in a fluoroscopy mode. The performance of an x-ray examination apparatus as described in the cited reference will not be fully satisfactory. The output screen of the image intensifier radiates its output light according substantially to Lambert's law. The area of the output screen is much larger than the area of a charge-coupled device according to presently available technology, therefore, optical coupling means are required for imaging regions of the output screen onto respective charge-coupled devices. According to the apparatus described in the cited reference, said optical coupling means consists of a plurality of lenses. Each of said lenses has a numerical aperture which is less than 1, or equivalently, its angle of acceptance is less than 90°. The respective regions of the output screen of the image intensifier being much larger than an area of each of said respective charge-coupled devices, a considerable demagnification is required for each of said lenses. Hence, the optical efficiency of the optical coupling means is substantially reduced, so that the intensity of the light arriving at the charge-coupled devices is insufficient for performing accurate fluoroscopic examinations.

It is *inter alia* an object of the invention to provide an x-ray examination apparatus having an imaging arrangement comprising an radiation conversion means, incorporating an x-ray sensitive phosphor layer, and the imaging arrangement comprising image conversion means being efficiently optically coupled with the radiation conversion means, for producing an electronical signal having a high signal-to-noise ratio when low doses of x-radiation are administered by the x-ray source.

To achieve this, an x-ray examination apparatus in accordance with the invention as defined in appended claim 1 comprises means for concentrating a light intensity distribution produced by the radiation conversion screen substaintially in a single direction, said means including on a side of the radiation conversion screen opposite the side facing the x-ray source, a tapetum filter having a substantial transmittivity for light having an angle of incidence in a region around normal incidence and having a substantial reflectivity of light having an angle of incidence beyond said region.

By way of the radiation conversion means, incident x-radiation is converted into visible radiation having a radiation for which the image conversion means are sensitive. Visible radiation is to be understood herein to imply radiation having a wavelength in a range of wavelengths pertaining to ultraviolet radiation to wavelengths pertaining to infrared radiation. Semiconductor image sensors, notably charge-coupled devices (CCDs), being devised for converting radiation having a wavelength in said range into electronical signals, produced according to the presently available technology have an area that is much smaller than the area of a radiation conversion means. Optically imaging a region of the radiation conversion means onto a semiconductor image sensor involves considerable demagnification. Concentrating the light intensity distribution, emitted from the radiation conversion means, substantially in a direction normal to the radiation conversion means reduces an amount of light bypassing optical coupling means. Therefore, sufficient light intensity available from the radiation conversion means is retained at a relevant semiconductor image sensor. Consequently, optical coupling of the radiation conversion means to the image conversion means is made more efficient in an imaging arrangement in accordance with the invention. It is known *per se* from the US patent **US 4 479 061** which mentions a reticulated grating for concentrating the lihgt intensity distribution.

Providing the radiation conversion screen with a tapetum filter causes the radiation conversion screen to emit light substantially in a direction normal to the surface of the radiation conversion screen. I.e. the light output from a radiation conversion screen provided with a tapetum filter has an intensity distribution that is more concentrated in the forward propagation direction of the emitted light, as compared to a Lambert-distribution that is pertinent to a uniformly radiating surface. It is to be noted that a tapetum filter *per se* is known from the field of projection television as disclosed in the European Patent **EP 0 170 320**. A tapetum filter is preferably fabricated from a stack of alternatingly a material having a high and a material having a low refractive index for a relevant region of wavelengths. High transmittivity for substantially perpendicularly incident light and simultaneously high reflectivity for obliquely incident light is achieved by making use of interferences of light reflected from various interfaces between different layers of the stack. However, as compared to employing a tapetum filter in projection television tubes, in the present invention a tapetum filter is required that concentrates the light intensity distribution within a narrower cone. This is achieved by adapting the optical thickness of the layers comprising the stack, and by making use of scaling relations of the angle of the cone into which light is emitted by the tapetum filter, with the optical thickness of the layers comprising the stack. The concentration of the light intensity distribution is further enhanced by providing the radiation conversion screen at the side that is exposed to x-radiation with a layer of material that is on the one hand transparent to x-radiation and on the other hand reflecting for visible radiation. Therefore, light being reflected by the tapetum filter is not entirely discarded, but is partially transmitted by the tapetum filter after multiple reflections.

A further preferred embodiment of an x-ray examination apparatus in accordance with the invention is characterised in that the x-ray sensitive phosphor layer comprises voids, each of them having a longitudinal axis substantially perpendicular to the layer.

Providing an x-ray sensitive phosphor layer comprising cracks, transverse to the layer further increases concentration in the forward direction of the light intensity distribution output by the radiation conversion screen. The cracks, i.e. voids having longitudinal axis in a direction substantially perpendicular to the x-ray sensitive phosphor layer act as guiding means for light rays travelling back and forth through the x-ray sensitive phosphor layer; said rays being reflected by both the tapetum filter and by the x-ray transmitting and visible radiation reflecting layer facing the x-ray source.

A further preferred embodiment of an x-ray examination apparatus in accordance with the invention is characterised in that the means for concentrating the light intensity distribution produced by the radiation conversion means substantially in a single direction comprises a material being transparent for said light and having a refractive index-value greater than the refractive index value of air.

By providing a material having a suitable refractive index and being transparent it is achieved that refraction away from the normal to the surface of the radiation screen occurs at a decreased angle of refraction as compared to the situation where light travels from the radiation conversion through air to the system of lenses. Thus the refracted light is further directed towards the normal to the surface of the radiation conversion screen. Thus further concentration of light intensity distribution in a direction normal to the surface of the radiation conversion screen is obtained.

A further preferred embodiment of an x-ray examination apparatus in accordance with the invention and wherein the image sensors are semiconductor image sensors is characterised in that said semiconductor image sensors are arranged for performing charge multiplication by impact ionisation having an associated gain factor, a signal-to-noise ratio of an output signal produced by a respective semiconductor image sensor being substantially at a local maximum as a function of the gain factor.

The sensitivity of a semiconductor image sensor, comprising a photo-diode, notably a CCD-sensor is improved by making use of an avalanche effect. Carrier multiplication occurs through impact ionisation when across a depletion layer of a photo-diode a sufficiently strong electric field is applied. By making use of the avalanching effect, i.e. charge multiplication by impact ionisation, the signal can be enhanced. By repeatedly weak-avalanching it is achieved to provide a image detector having both improved signal-to-noise ratio and improved sensitivity. This signal enhancement can be described by a gain factor. However, because impact ionisation itself is a random process, avalanching inevitably gives rise to increase of noise. The ensuing excess noise can be described by means of an excess noise factor which describes the extent to which noise due to avalanching increases in excess of the increase that can be attributed to average charge multiplication. Said excess noise factor is an increasing function of the gain factor. Moreover, there occur additive noise sources in a CCD, such as notably surface dark current generation, transfer noise reset noise and amplifier noise. As a consequence, avalanching increases both signal and noise, but the ensuing signal-to-noise ratio exhibits a maximum as a function of the gain factor. By avalanching weakly, i.e. at a gain factor pertaining to said maximum, repeatedly, both an increased sensitivity and an improved signal-to-noise ratio for an semiconductor image sensor are achieved. It is noted that avalanche multiplication of carriers is known per se from IEEE Trans. Electron. Devices ED-30 (1983) 694-699.

A further preferred embodiment of an x-ray apparatus in accordance with the invention wherein said image sensors comprise a plurality of light sensitive sensor elements, is characterised in that said image sensors are arranged for at option combining signals from groups of sensor elements of said image sensors.

Application of fluoroscopy during which low doses of x-radiation are administered to a entire object, is often alternated by application of exposure to higher doses of x-radiation to selected parts of the object. During fluoroscopy it is more of importance to have the image sensor operating at a high sensitivity, instead of having a high spatial resolution. Improving sensitivity at the expense of reducing spatial resolution is achieved by combining groups of neighbouring sensor elements in a CCD-sensor during fluoroscopy.

An imaging arrangement for use in a x-ray examination apparatus in accordance the invention preferably comprises means for concentrating a light intensity distribution produced by the radiation conversion means substantially in a single direction, each of the lenses having with respect to its dimension, a comparatively large angle of acceptance and the image sensors being arranged for increasing a signal-to-noise ratio of said electronical signal.

Radiation conversion means in the form of a radiation conversion screen for use in an x-ray examination apparatus in accordance with the invention preferably comprises a layer at a side of the radiation conversion screen facing the x-ray source, for transmitting x-radiation and reflecting visible radiation and comprises a tapetum filter on a side of the radiation screen opposite the side facing the x-ray source, having a substantial transmittivity for light having an angle of incidence in a region around normal incidence and having a substantial reflectivity of light having an angle of incidence beyond said region.

These and other aspects of the invention will become apparent from and elucidated with reference to the embodiments described hereinafter and with reference to the accompanying drawing.

Figure 1 shows a block scheme of an embodiment of an x-ray examination apparatus in accordance with the invention.

Figure 2 shows a detailed view of part of a radiation conversion screen incorporated in a imaging arrangement for an x-ray examination apparatus in accordance with the invention.

Figure 3 shows transmission characteristics of two alternative tapetum filters incorporated in a radiation conversion screen for an imaging arrangement in accordance with the invention and a transmission characteristic of a radiation conversion screen not provided with a tapetum filter.

Figure 4 shows a block scheme of another embodiment of an x-ray examination apparatus in accordance with the invention.

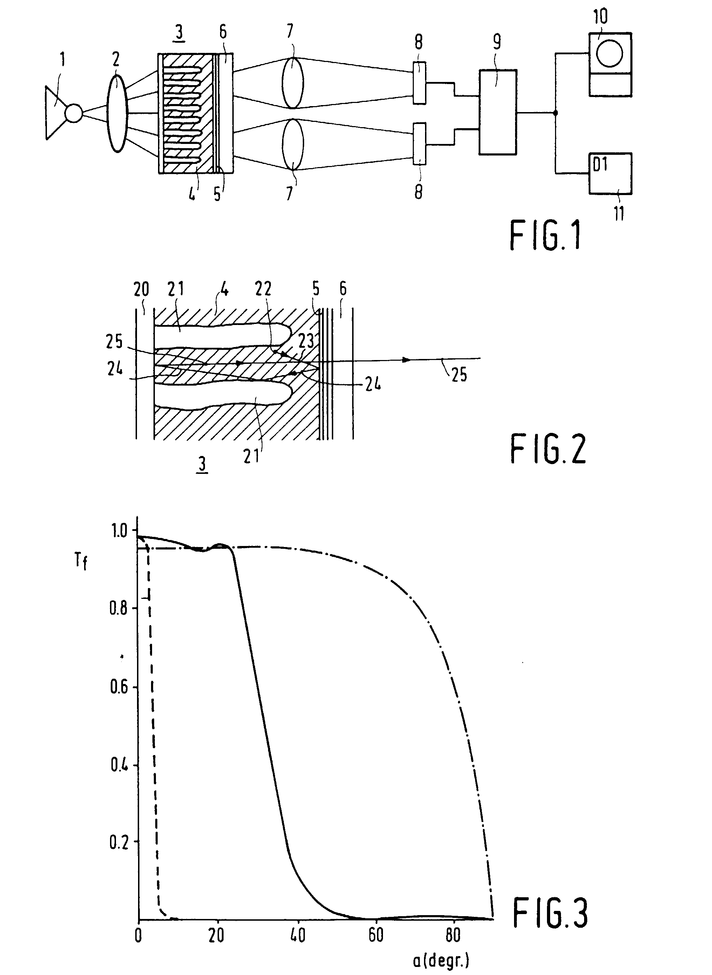

Figure 1 shows a block scheme of an x-ray examination apparatus in accordance with the invention. An x-ray source 1 is arranged for irradiating an object 2 and radiation passed through the object forms an x-ray image on a front side of a radiation conversion means. The radiation conversion means in the form of a radiation conversion screen 3 comprises an x-ray sensitive phosphor layer 4, notably containing an x-ray sensitive phosphor material that upon impinging x-radiation emits visible radiation having a wavelength that is in correspondence with a maximum of the sensitivity of the plurality of semiconductor image sensors 8, here having the form of weak-avalanche charge coupled devices 8. By the x-ray sensitive phosphor material, x-radiation is converted into visible radiation, thereby generating a visible image, in correspondence with the x-ray image, on the rear side of the radiation conversion screen. A preferred x-ray sensitive phosphor material comprises CsI that is activated by adding Tl. When x-radiation impinges upon such an x-ray sensitive phosphor material the material emits visible radiation having a distribution wavelengths mainly pertaining to green light, corresponding to wavelengths for which the semiconductor image sensors 8 have maximum sensitivity. By way of a tapetum filter 5 that is mounted on a glass substrate 6, light is emitted predominantly substantially normal to the rear surface of the radiation conversion screen. By way of lenses 7 having a high numerical aperture, regions of the rear surface of the radiation conversion screen are imaged on respective weak-avalanche charge coupled devices 8. In order to improve efficiency of the optical coupling of the semiconductor image sensors to the radiation conversion screen, preferably each of the lenses 7 have a numerical aperture that is large in relation to its dimension. The weak-avalanche CCDs 8 convert respective regions visible image into electrical video signals. By way of image recombination circuit means 10 the output video signals of the weak-avalanche CCDs are assembled into a recombined video signal. The recombined video signal can be supplied to a monitor 10 for viewing, or can be supplied to an output buffer circuit means 11 for further processing. An image conversion means is formed by the plurality of semiconductor image sensors 8 and the image recombination circuit means 9. The image conversion means together with the radiation conversion screen 3 and the lenses 7 constitute an embodiment of an imaging arrangement in accordance with the invention.

Figure 2 shows an detailed view of part of a radiation conversion screen 3 incorporated in an x-ray examination apparatus in accordance with the invention. Providing a x-ray sensitive phosphor layer comprising crystals of a material exhibiting fluorescence upon incidence of x-radiation having needle-structured morphology, such that the long-axes of the needle-structure are substantially aligned perpendicularly to the surface of the scintillation screen yields a intensity distribution that is more concentrated in the forward propagation direction of the emitted light, as compared to a Lambert-distribution that is pertinent to a uniformly radiating surface. The x-ray sensitive phosphor layer 4, notably consisting of CsI(Tl) is grown on an x-ray transparent layer 20 in such a fashion that the x-ray sensitive phosphor layer attains a needle like structure. That is, the x-ray sensitive phosphor layer 4, comprises voids 21, each having a longitudinal axis substantially aligned normal to the surface of the x-ray sensitive phosphor layer. In combination with a tapetum filter 5, this needle-like structure concentrates the intensity distribution of the visible light in a direction substantially perpendicular to the rear surface of the x-ray fluorescence screen. E.g. at a position indicated by reference numeral 22, a light ray 23 is generated by incident x-radiation, said light having a propagation direction obliquely to the normal of the rear surface. Owing to the high reflectivity of the tapetum filter 5, for light incident with an angle of incidence exceeding a cut-off value, the light ray 23 is reflected as light ray 24, which is subsequently reflected by a void 21 and is again reflected as light ray 25, by the layer 20 that is reflecting for light and transmitting for x-radiation. Such a layer can be made from a material that is highly reflecting to visible radiation and by making the layer thin so that it is transmitting for x-radiation. Preferably the layer 20 is formed from a material from the group TiO₂, Al₂O₃ or Al. Owing to the needle-structure of the x-ray sensitive phosphor layer 4, the light originally emitted obliquely with respect to the normal of the rear surface of the screen 3 is finally reflected by the front layer 20 substantially normal to the rear surface of the screen 3, so that it is incident on the tapetum filter with an angle of incidence that is smaller than the cut-off value, so that the light ray 25 is transmitted by the tapetum filter without substantial loss of intensity and within the acceptance cone of a relevant lens 7.

A tapetum filter 5 is preferably fabricated from a stack of alternatingly a material having a high and a material having a low refractive index for a relevant region of wavelengths. High transmittivity for substantially perpendicularly incident light and simultaneously high reflectivity for obliquely incident is achieved by making use of interferences of light reflected from various interfaces between different layers of the stack. This phenomenon is achieved *inter alia* in a quarterwave stack, i.e. a stack comprising a plurality layers having a optical thickness for a relevant wavelength that is substantially equal to one fourth of said relevant wavelength.

The drawn curve in Figure 3 shows a transmission characteristic of a tapetum filter comprising a stack of 20 layers of alternating a low refractive index material SiO₂ and a high refractive index material TiO₂. The transmittance T_{*f*} is presented as a function of the emission angle α for light having a wavelength λ = 544nm *in vacuo*. The drawn curve and the dotted curve. respectively in Figure 3 represent the transmittance T_{*f*} as a function of α of a radiation conversion screen provided with a respective tapetum filter. The dashed curve is drawn for comparison and represents the transmittance of a radiation conversion screen not provided with a tapetum filter, i.e. the dashed curve pertains to a uniformly radiating surface, i.e. the dashed curve corresponds to a Lambertian distribution. As appears from Figure 3, the transmittivity is approximately unity form light having an emission angle less than approximately 30°, and the transmittivity decreases rapidly when the emission angle increases beyond 30°. Thus, the tapetum filter has as an effect as required, that light being substantially perpendicularly incident is transmitted unaffected, whereas, light being obliquely incident on the tapetum filter is substantially totally reflected by the tapetum filter. In order to further enhance concentration of light emission from the radiation conversion screen in a forward direction, a tapetum filter having a transmission angle as small as less than a few degrees (e.g. less than 2°) is preferably employed.

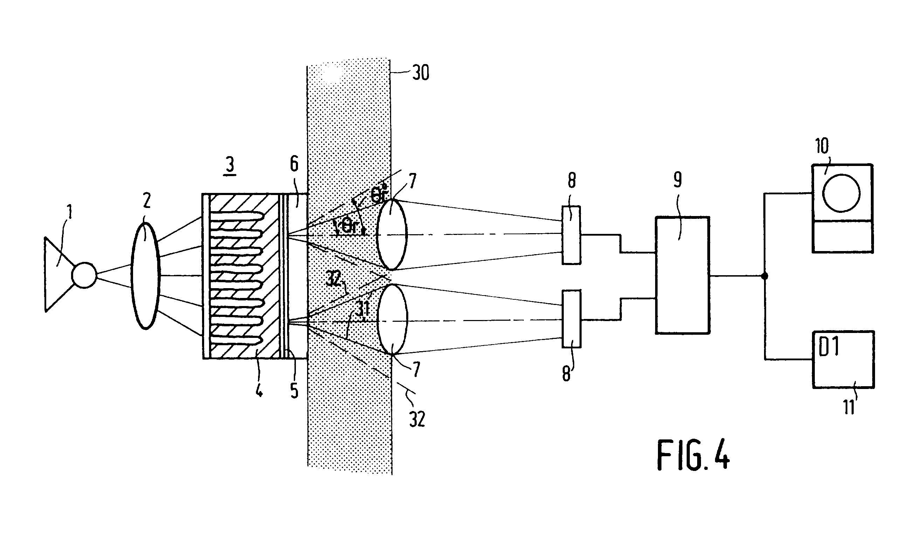

Figure 4 shows a block scheme of another embodiment of an x-ray examination apparatus in accordance with the invention. In this embodiment further improvement of concentrating light on the semiconductor image sensor is achieved by providing a transparent material 30 having a suitable refractive index in the region between the radiation conversion screen 3 and the lenses 7. As is shown in Figure 4 ray-paths 31 of light travelling from the radiation conversion screen 3 towards the lenses 7 are influenced so as to achieve concentrating light in a direction towards the lenses. Because of the transparent material 30 having a refractive index value greater than the refractive index for air, the angle of refraction θᵣ is reduced as compared to the angle of refraction θᵣ⁰ for light-rays travelling from the screen into air. For illustration of the advantageous effect of the material 30 on concentrating light in dashed lines the ray-paths 32 are shown along which the light would travel when the material 30 is replaced by air.

## Claims

1. An x-ray examination apparatus comprising an x-ray source (1), an imaging arrangement including a radiation conversion screen (3) facing the x-ray source, for converting image carrying x-radiation into image carrying visible radiation, image conversion means (8,9) having a plurality of image sensors (8) for converting the image carrying visible radiation formed by said radiation conversion screen into an electronical signal, a plurality of lenses (7) aligned with the radiation conversion means (3), so that respective regions of the radiation conversion screen (3) are imaged on respective image sensors (8), and means (5,21,30) for concentrating a light intensity distribution produced by the radiation conversion screen (3) substantially in a single direction.
characterised in that,
the means (5,21,30) for concentrating a light intensity distribution comprises on a side of the radiation conversion screen (3) opposite the side facing the x-ray source (1), a tapetum filter (5) having a substantial transmittivity for light having an angle of incidence in a region around normal incidence and having a substantial reflectivity of light having an angle of incidence beyond said region.

2. An x-ray examination apparatus as claimed in Claim 1,
further characterised in that
the radiation conversion screen (3) includes an x-ray sensitive phosphor (4) layer comprising voids (21) having a longitudinal axis substantially perpendicular to the layer.

3. An x-ray examination apparatus as claimed in any one of the preceding Claims,
further characterised in that
the means for concentrating the light intensity distribution comprises a material (30) being transparent for said light and having a refractive index value greater than the refractive index value of air.

4. An x-ray examination apparatus as claimed in any one of the preceding Claims, wherein
the image sensors (8) are semiconductor image sensors,
further characterised in that
said semiconductor image sensors are arranged for performing charge multiplication by impact ionisation having an associated gain factor, a signal-to-noise ratio of an output signal produced by a respective semiconductor image sensor being substantially at a local maximum as a function of the gain factor.

5. An x-ray examination apparatus as claimed in any one of the preceding Claims, wherein said image sensors (8) comprise a plurality of light sensitive sensor elements,
further characterised in that
said image sensors are arranged for combining signals from groups of sensor elements of said image sensors.

## Patentansprüche

1. Röntgenuntersuchungsgerät mit einer Röntgenquelle (1), einer Abbildungsanordnung mit einem der Röntgenquelle zugewandten Strahlungswandlerschirm (3) zum Umsetzen bildtragender Röntgenstrahlung in bildtragende sichtbare Strahlung, mit Bildwandlermitteln (8,9) mit einer Anzahl von Bildaufnahmesensoren (8) zum Umsetzen der vom Strahlungswandlerschirm erzeugten bildtragenden sichtbaren Strahlung in ein elektronisches Signal, und mit einer Anzahl auf die Strahlungswandlermittel (3) ausgerichteter Anzahl von Linsen (7), sodass betreffende Gebiete des Strahlungswandlerschirms (3) an betreffenden Bildaufnahmesensoren (8) abgebildet werden, und mit Mitteln (5, 21, 30) zum Bündeln einer vom Strahlungswandlerschirm (3) im Wesentlichen in einer einzigen Richtung erzeugten Lichtstärkeverteilung, dadurch gekennzeichnet, dass das Mittel (5, 21, 30) zum Bündeln einer Lichtstärkeverteilung an einer Seite des Strahlungswandlerschirms (3) gegenüber der der Röntgenquelle (1) zugewandten Seite ein Tapetum-Filter (5) mit einer im Wesentlichen spezifischen Lichtdurchlässigkeit mit einem Einfallswinkel in einem Gebiet um einen senkrechten Einfall und mit einer wesentlichen Reflexionskraft mit einem Einfallswinkel vorbei diesem Gebiet enthält.

2. Röntgenuntersuchungsgerät nach Anspruch 1, dadurch gekennzeichnet, dass der Strahlungswandlerschirm (3) einen röntgenempfindlichen Leuchtstoffschirm (4) mit Hohlräumen (21) mit einer im Wesentlichen senkrecht zur Schicht verlaufenden Längsachse enthält.

3. Röntgenuntersuchungsgerät nach einem der obigen Ansprüche, dadurch gekennzeichnet, dass das Mittel zum Bündeln der Lichtstärkeverteilung ein für Licht transparentes Material (30) mit einem größeren Brechungsindexwert als der Brechungsindexwert von Luft enthält.

4. Röntgenuntersuchungsgerät nach einem oder mehreren der vorangehenden Ansprüche, worin die Bildaufnahmesensoren (8) Halbleiter-Bildaufnahmesensoren sind, dadurch gekennzeichnet, dass die Halbleiter-Bildaufnahmesensoren zum Durchführen von Ladungsvervielfachung durch Stoßionisation mit einem zugeordneten Verstärkungsfaktor angeordnet sind, wobei ein Signal/Rauschverhältnis eines Ausgangssignals aus einem betreffenden Halbleiter-Bildaufnahmesensor abhängig vom Verstärkungsfaktor im Wesentlichen auf einem örtlichen Höchstwert liegt.

5. Röntgenuntersuchungsgerät nach einem oder mehreren der vorangehenden Ansprüche, worin die Bildaufnahmesensoren (8) eine Anzahl lichtempfindlicher Sensorelemente enthalten, dadurch gekennzeichnet, dass die Bildaufnahmesensoren zum Kombinieren von Signalen aus Gruppen von Sensorelementen der Bildaufnahmesensoren angeordnet sind.

## Revendications

1. Appareil pour l'examen radiographique comprenant une source de rayons X (1), un dispositif de formation d'image comprenant un écran de conversion de rayonnement (3) situé en face de la source de rayons X, afin de convertir du rayonnement X portant l'image en un rayonnement visible portant l'image, des moyens de conversion d'image (8, 9) présentant une pluralité de capteurs d'image (8) afin de convertir le rayonnement visible portant l'image formé par ledit écran de conversion de rayonnement en un signal électronique, une pluralité de lentilles (7) alignées par rapport aux moyens de conversion de rayonnement (3) de façon que des régions respectives de l'écran de conversion de rayonnement (3) soient représentées sur des capteurs d'images respectifs (8), et un moyen (5, 21, 30) permettant de concentrer une répartition d'intensité lumineuse produite par l'écran de conversion de rayonnement (3) pratiquement dans une seule direction,
caractérisé en ce que,
le moyen (5, 21, 30) permettant de concentrer une répartition d'intensité lumineuse comprend, sur une face de l'écran de conversion de rayonnement (3) opposée à la face située en face de la source de rayons X (1), un filtre du genre "tapetum"(5) présentant une transmission notable pour la lumière présentant un angle d'incidence dans une région située autour l'incidence normale ainsi qu'une réflexion notable de la lumière présentant un angle d'incidence situé au-delà de ladite région.

2. Appareil pour l'examen radiographique selon la revendication 1,
caractérisé en outre en ce que
l'écran de conversion de rayonnement (3) est muni d'une couche en phosphore sensible aux rayons X (4) comprenant des vides (21) présentant un axe longitudinal perpendiculaire à la couche.

3. Appareil pour l'examen radiographique selon l'une des revendications précédentes,
caractérisé en outre en ce que
le moyen permettant de concentrer la répartition d'intensité lumineuse comprend un matériau (30) qui est transparent pour ladite lumière et qui présente une valeur de l'indice de réfraction supérieure à la valeur de l'indice de réfraction de l'air.

4. Appareil pour l'examen radiographique selon l'une des revendications précédentes, dans lequel
les capteurs d'image (8) sont constitués par des capteurs d'image semi-conducteurs,
caractérisé en outre en ce que
lesdits capteurs d'image semi-conducteurs sont disposés afin d'effectuer une multiplication de charge par ionisation par choc présentant un facteur d'amplification associé, un rapport signal - bruit d'un signal de sortie produit par un capteur d'image semi-conducteur respectif étant pratiquement à un maximum local en fonction du facteur d'amplification.

5. Appareil pour l'examen radiographique selon l'une des revendications précédentes, dans lequel lesdits capteurs d'image (8) comprennent une pluralité d'éléments capteurs sensibles à la lumière,
caractérisé en outre en ce que
lesdits capteurs d'image sont disposés pour la combinaison des signaux provenant des groupes d'éléments capteurs desdits capteurs d'image.
